# EUROPEAN PATENT APPLICATION

(11) **EP 4 742 611 A1**
(43) Date of publication of application: **13.05.2026**
(21) Application number: 23944081.1
(22) Date of filing: 06.07.2023
(51) Int. Cl.: H04L 41/14, H04W 24/10

(54) **INFORMATION TRANSMISSION METHOD, FIRST DEVICE AND SECOND DEVICE**

(71) Applicant: GUANGDONG OPPO MOBILE TELECOMMUNICATIONS CORP., LTD., Dongguan, Guangdong 523860 (CN)
(72) Inventor: FAN, Jiangsheng, Dongguan, Guangdong 523860 (CN); WU, Hao, Dongguan, Guangdong 523860 (CN)
(74) Representative: Novagraaf Technologies
(86) International application number: PCT/CN2023/106177
(87) International publication number: WO 2025/007354

(57) **Abstract**

The present application relates to an information transmission method, a first device, a second device, a chip, a computer readable storage medium, a computer program product, a computer program and a communication system. The information transmission method comprises: the first device sends a first message, wherein the first message comprises M types of information, and each type of information among the M types of information is obtained by processing collected data on the basis of a processing mode corresponding to each type of information, M being an integer greater than or equal to 1. According to embodiments of the present application, data corresponding to different processing modes or data in different formats can be flexibly collected for different requirements, thereby improving the flexibility of data collection.

## Description

### TECHNICAL FIELD

The present disclosure relates to the technical field of communications, and specifically relates to a method for transmitting information, and a first device, a second device, a chip, a computer-readable storage medium, a computer program product, a computer program, and a communication system thereof.

### RELATED ART

In a communication system network, a terminal, a radio access network, and a core network generate a large amount of data during the operation of the network. The data is distributed in different devices and layers in the network, involving different software and hardware, different functions and different protocol stacks. In order to take advantage of the large amount of complex data, how to flexibly collect various types of data is a question to consider.

### SUMMARY

Embodiments of the present disclosure provide a method for transmitting information. The method includes: transmitting a first message by a first device, wherein the first message includes M types of information, and each type of information in the M types of information is acquired by processing collected data in a processing way corresponding to the each type of information, M being an integer greater than or equal to 1.

The embodiments of the present disclosure provide a method for transmitting information. The method includes: receiving a first message by a second device, wherein the first message includes M types of information, and each type of information in the M types of information is acquired by processing collected data in a processing way corresponding to the each type of information, M being an integer greater than or equal to 1.

The embodiments of the present disclosure provide a first device. The first device includes: a first communication module, configured to transmit a first message, wherein the first message includes M types of information, and each type of information in the M types of information is acquired by processing collected data in a processing way corresponding to the each type of information, M being an integer greater than or equal to 1.

The embodiments of the present disclosure provide a second device. The second device includes: a second communication module, configured to receive a first message, wherein the first message includes M types of information, and each type of information in the M types of information is acquired by processing collected data in a processing way corresponding to the each type of information, M being an integer greater than or equal to 1.

The embodiments of the present disclosure provide a first device. The first device includes: a processor and a memory. The memory is configured to store one or more computer programs; and the processor is configured to load and run the one or more computer programs stored in the memory to cause the first device to perform the method for transmitting information as described above.

The embodiments of the present disclosure provide a second device. The second device includes: a processor and a memory. The memory is configured to store one or more computer programs; and the processor is configured to load and run the one or more computer programs stored in the memory to cause the second device to perform the method for transmitting information as described above.

The embodiments of the present disclosure provide a chip configured to perform the method for transmitting information as described above.

Specifically, the chip includes a processor configured to load and run one or more computer programs from a memory to cause a device installed with the chip to perform the method for transmitting information as described above.

The embodiments of the present disclosure provide a computer-readable storage medium configured to store one or more computer programs. The one or more computer programs, when run by a device, cause the device to perform the method for transmitting information as described above.

The embodiments of the present disclosure provide a computer program product, including: one or more computer instructions. The one or more computer instructions cause a computer to perform the method for transmitting information as described above.

The embodiments of the present disclosure provide a computer program. The computer program, when running on a computer, causes the computer to perform the method for transmitting information as described above.

The embodiments of the present disclosure provide a communication system. The communication system including the first device and the second device configured to perform the methods for transmitting information as described above.

In the embodiments of the present disclosure, the first message transmitted by the first device includes M types of information, and each type of information is acquired by processing collected data in a corresponding processing way. In this way, data corresponding to different processing ways or data in different formats can be collected flexibly based on different demands, thereby improving the flexibility of data collection.

### BRIEF DESCRIPTION OF DRAWINGS

FIG. 1 is a schematic diagram of a communication system according to some embodiments of the present disclosure;
FIG. 2 is a schematic flowchart of a method for transmitting information according to some embodiments of the present disclosure;
FIG. 3 is a schematic flowchart of a method for transmitting information according to some embodiments of the present disclosure;
FIG. 4 is a flowchart of an application example according to some embodiments of the present disclosure;
FIG. 5 is a schematic block diagram of a first device according to some embodiments of the present disclosure;
FIG. 6 is a schematic block diagram of a second device according to some embodiments of the present disclosure;
FIG. 7 is a schematic block diagram of a communication device according to some embodiments of the present disclosure;
FIG. 8 is a schematic block diagram of a chip according to some embodiments of the present disclosure; and
FIG. 9 is a schematic block diagram of a communication system according to some embodiments of the present disclosure.

### DETAILED DESCRIPTION

The technical solutions according to the embodiments of the present disclosure are described hereinafter in combination with the accompanying drawings for the embodiments of the present disclosure.

The technical solutions according to the embodiments of the present disclosure are applicable to various communication systems, such as a new radio (NR) system, an evolution system of the NR system, an NR-based access to unlicensed spectrum (NR-U) system, a non-terrestrial network (NTN) system, a wireless local area network (WLAN), a wireless fidelity (Wi-Fi), a 5^{th} generation (5G) communication system, a 6^{th} generation (6G) communication system, or other communication systems.

In general, the traditional communication systems support a limited number of connections and is relatively easy to implement. However, with the development of the communication technologies, the mobile communication systems not only support traditional communications, but also support terminal-to-terminal direct communications, such as device-to-device (D2D) communications, machine-to-machine (M2M) communications, machine-type communications (MTC), vehicle-to-vehicle (V2V) communications, vehicle-to-everything (V2X) communications, and the like. The embodiments of the present disclosure are also applicable to such communication systems.

In some embodiments, the communication systems according to the embodiments of the present disclosure are also applicable to a carrier aggregation (CA) scenario, a dual connectivity (DC) scenario, or a standalone (SA) scenario.

In some embodiments, the communication systems according to the embodiments of the present disclosure are also applicable to an unlicensed spectrum. The unlicensed spectrum may also be considered as a shared spectrum. Alternatively, the communication systems according to the embodiments of the present disclosure are also applicable to a licensed spectrum. The licensed spectrum may also be considered as a non-shared spectrum.

Various embodiments are described in conjunction with a network device and a terminal device in the embodiments of the present disclosure. The terminal device is also referred to as a user equipment (UE), an access terminal, a subscriber unit, a subscriber station, a rover station, a mobile station, a remote station, a remote terminal, a mobile device, a user terminal, a terminal, a wireless communication device, a user agent, a user apparatus, or the like.

The terminal device may be a station (STA) in the WLAN, for example, a cellular phone, a cordless phone, a Session Initiation Protocol (SIP) phone, a wireless local loop (WLL) STA, a personal digital assistant (PDA), a hand-held device with a wireless communication capability, a computing device or other processing devices connected to a wireless modem, an in-vehicle device, a wearable device, a terminal device in a next generation communication system (e.g., the NR network), a terminal device in an evolved public land mobile network (PLMN) network, or the like.

In the embodiments of the present disclosure, the terminal device is deployed on land (e.g., indoors or outdoors, or handheld, wearable, or vehicle-mounted deployment); or the terminal device may be deployed on water (for example, on a ship) or underwater (for example, in a submarine); or the terminal device may be deployed in the air (e.g., on an aircraft, a balloon, or a satellite).

In the embodiments of the present disclosure, the terminal device is a mobile phone, a pad, a computer with a radio transceiver function, a virtual reality (VR) terminal device, an augmented reality (AR) terminal device, a terminal device in personal internet of things (PIoT), a wireless terminal device in industrial control, a wireless terminal device in self-driving, a wireless terminal device in remote medical, a wireless terminal in smart grid, a wireless terminal in transportation safety, a wireless terminal in smart city, or a wireless terminal device in smart home.

By way of example but not limitation, in the embodiments of the present disclosure, the terminal device may be a wearable device. The wearable device may also be referred to as a wearable smart device, which is a generic name for wearable devices such as glasses, gloves, watches, clothes, and shoes that are developed by applying wearable technologies for smart designs of daily wearables. The wearable device is a portable device that is directly worn on a body or integrated into clothing or an accessory of a user. The wearable device is not only a hardware device, but also implements powerful functions by software support, data exchange, and cloud interaction. In a broad sense, the wearable smart device includes a full-functionality and large-size device capable of implementing all or part of functions without relying on a smart phone, for example, a smart watch or smart glasses; and includes a device specializing in specific application functions and needs to be used with another device such as a smart phone, for example, various smart bracelets or smart jewelry for vital sign monitoring.

In some embodiments of the present disclosure, the network device is a device for communication with a mobile device, and the network device is an access point (AP) in a WLAN, a network device (gNB) in an NR network, a network device in a future evolved PLMN network, or a network device in an NTN network.

By way of example but not limitation, in the embodiments of the present disclosure, the network device has mobile characteristics. For example, the network device is a mobile device. In some embodiments, the network device is a satellite or a balloon station. For example, the satellite is a low earth orbit (LEO) satellite, a medium earth orbit (MEO) satellite, a geostationary earth orbit (GEO) satellite, a high elliptical orbit (HEO) satellite, or the like. In some embodiments, the network device is a base station installed in locations such as land and water.

In some embodiments of the present disclosure, the network device provides services for cells, and the terminal device communicates with the network device over transmission resources (e.g., frequency domain resources or frequency spectrum resources) used by the cell, which is a cell corresponding to the network device (e.g., a base station). The cell is a base station corresponding to a macro base station or a small cell. The small cell herein includes a metro cell, a micro cell, a pico cell, or a femto cell. The small cells are characterized by a small coverage area and low transmission power, which are suitable for providing high-speed data transmission services.

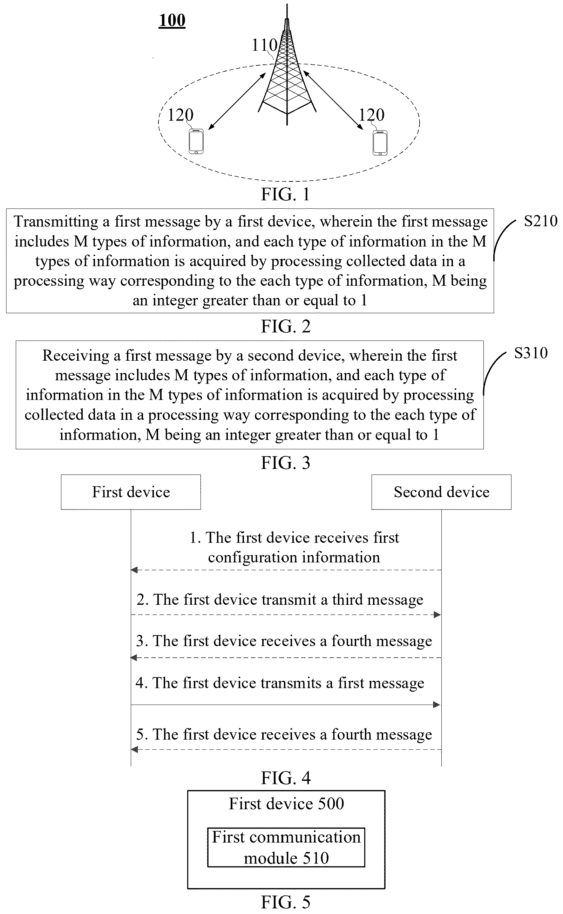

FIG. 1 illustrates a communication system 100 as an example. The communication system includes a network device 110 and two terminal devices 120. In some embodiments, the communication system 100 includes a plurality of network devices 110, and the coverage area of each of the network devices 110 includes other numbers of terminal devices 120, which are not limited in the embodiments of the present disclosure.

It should be understood that the terms "system" and "network" herein are interchangeably used herein. The term "and/or" herein merely indicates an association relationship describing associated objects, that is, three types of relationships. For example, the phrase "A and/or B" indicates (A), (B), or (A and B). In addition, the character "/" generally indicates an "or" relationship between the associated objects.

It should be understood that the term "indicate" in the embodiments of the present disclosure means the direct indication, indirect indication, or an associated relationship. For example, A indicating B means that A directly indicates B, for example, B is acquired by A; A indirectly indicates B, for example, A indicates C and B is acquired by C; A and B are associated.

In the description of the embodiments of the present disclosure, the term "corresponding" mean that there is a direct correspondence relationship or indirect correspondence relationship between two objects, an association relationship between two objects, a relationship of indicating or being indicated, or a relationship of configuring and being configured.

FIG. 2 illustrates a schematic flowchart of a method for transmitting information according to some embodiments of the present disclosure. The method is applicable to the system illustrated in FIG. 1 but is not limited thereto. The method includes at least part of the following contents.

In S210, a first device transmits a first message, wherein the first message includes M types of information, and each type of information in the M types of information is acquired by processing collected data in a processing way corresponding to the each type of information; and M is an integer greater than or equal to 1.

In the embodiments of the present disclosure, the first device is any device in a communication system. For example, the first device is a network device or a terminal device.

In some embodiments, the network device is an access network device, a core network device, an information management device or operation administration and maintenance (OAM) device related to an artificial intelligence (Al)/machine learning (ML) model, or the like.

In some embodiments, the access network device is any one of: a gNB, a centralized unit (CU), a distributed unit (DU), a centralized unit-control plane (CU-CP), or a centralized unit-user plane (CU-UP).

In some embodiments, the core network device is any one of: a location management function (LMF) network element, a network slice selection function (NSSF) network element, an authentication server function (AUSF) network element, a unified data management (UDM) network element, an access and mobility management function (AMF) network element, a session management function (SMF) network element, a policy control function (PCF) network element, a user plane function (UPF) network element, a sensing function (SF) network element, or a network data analytics function (NWDAF) network element.

In the embodiments of the present disclosure, the first message is any message transmitted in the communication system, that is, the above M types of information are carried in any type of message.

In some embodiments, the first message is any one of: an NR Positioning Protocol A (NRPPa) message, a Long-Term Evolution Positioning Protocol (LPP) message, a non-access stratum (NAS) message, a radio resource control (RRC) message, a media access control control element (MAC CE) message, a downlink control information (DCI) message, an uplink control information (UCI) message, a physical uplink control channel (PUCCH) message, a physical uplink shared channel (PUSCH) message, an inter-node message, an Xn interface message, an F1 interface message, an E1 interface message, an NG interface message, a service-based architecture message in a core network, or an AI dedicated message.

In some embodiments, the first message is a unicast message, a multicast message, or a broadcast message. The unicast message (one to one) refers to a message that is transmitted by an information source over a unicast channel. Only a terminal device or network device allocated with a corresponding unicast resource can attempt to receive the unicast message, and the unicast message is also referred to as dedicated signaling. The multicast message (one to many) refers to a message that is transmitted by an information source over a multicast channel. Only a terminal device or network device that is within the coverage of a multicast signal and is a member of a group can attempt to receive the multicast message, and when joins a group, the terminal device or network device acquires resources related to the multicast channel. A broadcast message refers to a message that is transmitted by an information source over a broadcast channel. Any terminal device or network device that is within the coverage of a broadcast signal can attempt to receive the broadcast message.

In the embodiments of the present disclosure, the collected data may be any type of data transmitted among devices in a communication system, such as measurement related data, device related data, and transmission resource related data, which is not limited in the embodiments of the present disclosure.

For example, the collected data includes quantized information of data acquired by measurement. The first device needs to quantize the data acquired by measurement (which is also referred to as measurement results). For example, a synchronization signal block (SSB) is measured, and an actual measurement result range of a reference signal received power (RSRP) of a measuring receiver is a numerical interval [a, b]. Since the numerical interval [a, b] contains an infinite type of values, the numerical interval [a, b] needs to be quantized prior to being reported. For example, the numerical interval [a, b] is divided into 256 numerical subintervals, with each numerical subinterval being associated with one 8-bit binary bit value, and an 8-bit binary bit is taken as collected data. The association relationship between each numerical subinterval and the 8-bit binary bit value is predefined in a protocol. The first device acquires corresponding reporting information (one of the M types of information) by processing the 8-bit binary bit, and the corresponding reporting information is carried in the first message for transmission. A data receiver restores the reporting information to a corresponding measurement result based on the 8-bit binary bit acquired by parsing and in conjunction with the association relationship predefined in the protocol. A certain degree of error is present in reporting the measurement result in a quantitative manner. Generally, the more detailedly (more) the numerical subintervals are divided, the higher the accuracy in reporting the measurement, which, however, increases reporting overheads because more bits are required to represent more numerical subintervals. Table 1 illustrates an example of the above direct association relationship.

**Table 1**

| | |
|---|---|
| 8-bit binary bit value 1 | Measurement result numerical subinterval 1 |
| 8-bit binary bit value 2 | Measurement result numerical subinterval 2 |
| ...... | ...... |
| 8-bit binary bit value n | Measurement result numerical subinterval n |

In Table 1, n is a positive integer greater than or equal to 1. A specific value of the collected data corresponds to one measurement result numerical subinterval. For example, the collected data occupies 8 bits, which at most represents 256 measurement result numerical subintervals.

In the embodiments of the present disclosure, the M types of information in the first message include information acquired by processing the collected data in M processing ways respectively. That is, each type of information corresponds to one processing way. In some embodiments, different types of information in the M types of information include information acquired by processing different collected data in different processing ways or include information acquired by processing the same collected data in different processing ways.

It should be noted that in the descriptions of the first-type information, the second-type information, the third-type information, and the fourth-type information in the embodiments of the present disclosure, the terms "first," "second," "third," and "fourth" are merely intended to distinguish among different types of information, but do not represent the serial number of the corresponding information type or the position sequence of the information in the first message. Additionally, in actual practice, the number of each type of information in the first message is not limited. For example, three pieces of first-type information and five pieces of second-type information are present in the first message. In term of position, different data belonging to the same type of information is adjacent or spaced apart by some data in the first message. Taking an example where the M types of information include three pieces of first-type information and five pieces of second-type information, the three pieces of first-type information may be the 5^{th} piece of information, the 6^{th} piece of information, and the 8^{th} piece of information in the first message, and the five pieces of second-type information may be the 1^{st} to 4^{th} pieces of information and the 7^{th} piece of information in the first message.

In the above method, the first message transmitted by the first device includes M types of information, and each type of information is acquired by processing collected data in a corresponding processing way. Therefore, data corresponding to different processing ways or data in different formats can be flexibly collected based on different demands, and the flexibility of data collection is improved.

Corresponding to the above method, the embodiments of the present disclosure provide a method for transmitting information performed by a second device. FIG. 3 illustrates a schematic flowchart of a method for transmitting information according to some embodiments of the present disclosure. The method is optionally applicable to the system illustrated in FIG. 1, but is not limited thereto. The method includes at least part of the following contents.

In S310, the second device receives a first message, wherein the first message includes M types of information, and each type of information in the M types of information is acquired by processing collected data in a processing way corresponding to the each type of information, M being an integer greater than or equal to 1.

In some embodiments, the first message received by the second device is the first message transmitted from the first device in the above embodiments. The second device is any device except the first device on the transmission link of the first message, that is, the second device is an intermediate node or terminal node (which may also be referred to as a target device for the first message) that receives the first message on the transmission link of the first message.

In the embodiments of the present disclosure, the second device is any device except the first device in the communication system. In some embodiments, the second device is a network device or a terminal device. That is, the embodiments of the present disclosure are applicable to one of the following scenarios:
scenario 1: the first device is a terminal device, and the second device is a network device;
scenario 2: the first device is a network device, and the second device is a terminal device;
scenario 3: the first device is a first terminal device, and the second device is a second terminal device; or
scenario 4: the first device is a first network device, and the second device is a second network device.

For example, the embodiments of the present disclosure are applicable to an AI model-related data collection scenario, in which an AI model is trained and optimized based on collected data by transmitting the collected data among devices so as to guide and optimize the communication process using the AI model. For example, the collected data includes measurement related data, and the data collection process involved in this scenario includes scenario 1 in which a terminal device reports a measurement result to a network device or includes scenario 2 in which a first network device reports measurement results acquired by a first network device from a plurality of terminal devices to a second network device deployed with an AI model.

In some embodiments, in the embodiments of the present disclosure, the network device is an access network device, a core network device, an AI/ML model related information management device or OAM device, or the like. For the optional implementations of the access network device and the core network device, reference may be made to the above embodiments, which are not elaborated herein any further. Some examples of the data collector, i.e., the second device, are provided hereinafter.

For example, the second device is a core network device. The core network device includes a network data analytics function (NWDAF), which is mainly used for function optimization analysis. For each optimization goal, the NWDAF entity respectively defines the types of data to be collected and potential data sources, and further provides possible optimization analytic behavior outputs. Certainly, how to use the collected data to acquire a behavior output of optimization analysis is processed in an implementation manner.

For another example, the second device is an OAM device that processes AI/ML model related information. The OAM device includes a function of self-organizing networks (SON) and minimization of drive tests (MDT), which is mainly used for data collection related to functional optimization, such as collection of data required for functions of handover optimization, coverage optimization, random access optimization, and the like. The utilization of collected data and the definition of optimization behaviors are both processed in an implementation manner. Alternatively, the OAM device includes a management data analytics (MDA) function, which is mainly used for function optimization analysis. For each optimization goal, the MDA entity respectively defines the types of data to be collected and potential data sources, and further provides possible optimization analytic behavior outputs. Certainly, how to use the collected data to acquire a behavior output of optimization analysis is processed in an implementation manner. Different from the NWDAF function, the function entity of MDA even has a capability to use the data output by the function entity of NWDAF.

In some embodiments, the M types of information include at least one of:
first-type information, including incremental data of first collected data relative to reference data;
second-type information, including compressed data of second collected data; or
third-type information, including a first information container for bearing third collected data, wherein the first information container is used to indicate that the third collected data is to be parsed by a target device.

Specifically, the M types of information include the first-type information, the second-type information, or the third-type information. Alternatively, the M types of information include the first-type information and the second-type information, or include the second-type information and the third-type information, or include the first-type information and the third-type information, or include the first-type information, the second-type information, and the third-type information, which is set based on actual demands in actual practice.

In a case where the M types of information include the first-type information, the first device transmits data by replacing original first collected data with the incremental data, which can reduce the transmission overheads.

In a case where the M types of information include the second-type information, the first device transmits data by replacing original second collected data with the compressed data, which can reduce the transmission overheads.

In a case where the M types of information include the third-type information, the first device reports data in a manner of an information container. The third collected data in the information container is to be parsed by the target device, and the third collected data in the information container is not parsed by an intermediate node on the transmission link, which is beneficial to privacy protection and minimized disclosure of information. In addition, because it is not necessary for each node to be capable of parsing data, non-standard format data can be transmitted.

Each type of information described above is described hereinafter. It should be noted that the examples of each type of data involved in the following descriptions and the specific implementations thereof are optional but not essential, that is, the technical solutions according to the embodiments of the present disclosure are not limited to the following examples and implementations.

### First-type information:

In the embodiments of the present disclosure, the incremental data in the first-type information may be understood as differential data, a difference value, or the like between the first collected data and the reference data. That is, the processing way corresponding to the first-type information is to subtract the reference data from the first collected data or to subtract the first collected data from the reference data. The first collected data and the reference data are the same type of data. For example, the first collected data and the reference data both represent numerical values that have an association relationship with the numerical subinterval to which the measurement result belongs, or the first collected data and the reference data are both numerical values, multi-bit bits or other forms of data corresponding to the measurement result numerical subinterval.

In some embodiments, each piece of incremental data in the first-type information represents a numerical value greater than or equal to 0 (a positive value or 0), or represents a numerical value greater than or equal to 0 and a numerical value less than 0 (a positive value, a negative value, or 0). Two implementations are provided hereinafter.

In implementation 1, the numerical value represented by the incremental data is a positive value or 0.

Specifically, in this implementation, the first-type information in the first message includes a plurality of pieces of incremental data in a one-to-one correspondence with a plurality of pieces of first collected data. In a case where the numerical value represented by the reference data is less than the numerical value represented by any piece of incremental data in the first-type information, the value represented by the incremental data in the first-type information is a positive value. In a case where the numerical value represented by the reference data is equal to a minimum one of values represented by one or more pieces of incremental data in the first-type information, the values represented by the incremental data in the first-type information are positive values or 0. For example, in a case where the measurement result numerical subinterval corresponding to the reference data is m (corresponding to the m^{th} row in Table 1), the first-type information in the first message includes four pieces of incremental data (that is, four pieces of data in the first message are the first-type information), and the numerical values represented by the four pieces of incremental data are 1, 4, 5, and 8 respectively, the four pieces of first collected data corresponding to the four pieces of incremental data in the first-type information represent measurement result numerical subintervals (m+1), (m+4), (m+5), and (m+8), respectively.

In implementation 2, the numerical values represented by the incremental data include a positive value or 0, and a negative value.

Specifically, in this implementation, the first-type information includes a plurality of pieces of incremental data in a one-to-one correspondence with a plurality of pieces of first collected data. The value of the reference data may be defined more flexibly. For example, in a case where the measurement result numerical subinterval corresponding to the reference data is m (corresponding to the m^{th} row in Table 1, wherein m is greater than 4), and the first-type information includes four pieces of incremental data, which are -1, -4, 5, and 8 respectively, the four pieces of incremental data in the first first-type information correspond to four pieces of first collected data, and the four pieces of first collected data represent measurement result numerical subintervals (m-1), (m-4), (m+5), and (m+8), respectively.

In the embodiments of the present disclosure, the first-type information takes the reference data as a basis. A plurality of implementations for the reference data are provided hereinafter.

In some embodiments, the reference data corresponding to an i^{th} piece of first collected data reported by the first device (i.e., the reference data corresponding to the incremental data) is an (i-1)^{th} piece of first collected data, wherein i is an integer greater than or equal to 2. The reference data corresponding to a 1^{st} piece of first collected data reported by the first device is predefined or is reference data carried in a 1^{st} message used for reporting collected data. For example, the first message transmitted by the first device includes nine pieces of incremental data, or the first device transmits a message for reporting collected data three times, the message transmitted each time includes three pieces of incremental data, and thus the messages transmitted in three times include nine pieces of incremental data. In the nine pieces of incremental data, the reference data for each piece of incremental data from the 2^{nd} piece of incremental data is first collected data corresponding to the previous piece of incremental data. The reference data for the 1^{st} piece of incremental data is a predetermined numerical value, e.g., 0, or is reference data carried in the message carrying the 1^{st} piece of incremental data. For example, the reference data for the 1^{st} piece of incremental data is a predetermined value m or is reference data m carried in a message. In a case where one or more messages transmitted by the first device for reporting collected data include four pieces of incremental data having values of -1, -4, 5, and 8 respectively, the first collected data corresponding to the four pieces of incremental data is (m-1), (m-1-4), (m-1-4+5), and (m-1-4+5+8), respectively.

In some embodiments, the M types of messages in the first message further include fourth-type information, wherein the fourth-type information includes the reference data. It is understandable that the M types of messages may include both the first-type information and the fourth-type information, such that the second device receiving the first message can acquire the first collected data corresponding to the incremental data in the first-type information by directly parsing the first message.

That is, the fourth-type information may be a mandatory parameter in the first message. In some embodiments, each time (or, each round) the first device transmits a message used for reporting collected data (e.g., transmits the first message), the fourth-type information must appear. The first-type information in the message reported each time is parsed with reference to the fourth-type information in the message.

In some embodiments, the fourth-type information is taken as an example of the collected data. That is, the reference data in the fourth-type information is fourth collected data, and the processing way corresponding to the fourth-type information is to take the collected data itself as transmitted data. For example, the reference data in the fourth-type information is minimum data in the first collected data to be reported (In this case, the value of the incremental data is a positive value or 0) or any other data (In this case, the value of the incremental data is a positive value, a negative value or 0). In some embodiments, the fourth-type information is only taken as a reference for the first-type information, that is, the fourth-type information is not taken as an example of the collected data.

In some embodiments, in a case where the first message does not include the fourth-type information carrying reference data or in a case where the fourth-type information carrying reference data included in the first message is unavailable, the reference data is determined based on a second message.

In some embodiments, the second message is another message used for reporting collected data and the second message is transmitted prior to the first message.

According to the above embodiments, the message transmitted each time to report collected data does not necessarily carry the fourth-type information, thereby further reducing the overheads.

In some embodiments, the reference data is determined based on at least one of fourth-type information or first-type information in the second message.

In some embodiments, the first message includes the fourth-type information, wherein the fourth-type information may not appear. Specifically, the fourth-type information carrying the reference data included in the first message is unavailable, which may be understood as that the first message includes a field corresponding to the fourth-type information but the field value is empty, or may be understood as that the fourth-type information is an optional field in the first message (or an optional parameter), and the fourth-type information may not appear in the first message.

That is, the fourth-type information is an optional parameter in the first message. Each time a message used for reporting collected data is transmitted, the fourth-type information may appear or may not appear. In a case where the fourth-type information in the first message appears, the first-type information in the first message is referenced to the fourth-type information in the first message. In a case where the fourth-type information in the first message is unavailable, the first-type information in the first message is referenced to the fourth-type information provided in the process of reporting collected data most recently. Accordingly, the second message is a message which the fourth-type information appears in and is closest to the first message in a plurality of messages used for reporting collected data. The reference data for the first-type information in the first message is determined based on the fourth-type information in the second message. For example, the first device transmits four messages for reporting collected data, of which only the 1^{st} message and the 2^{nd} message include the fourth-type information. In this case, the reference data for the first-type information in the 1^{st} message is the fourth-type information in the 1^{st} message, the reference data for the first-type information in the 2^{nd} message is the fourth-type information in the 2^{nd} message, and the reference data for the first-type information in the 3^{rd} message and in the 4^{th} message is the fourth-type information in the 2^{nd} message.

In some embodiments, the first message does not include the fourth-type information, and the reference data corresponding to each piece of incremental data in the first-type information is the first collected data corresponding to the previous piece of incremental data. When the first device transmits messages for reporting collected data multiple times, the reference data corresponding to the incremental data in the first-type information in the first message is the first collected data corresponding to the incremental data in the first-type information that is carried in the message transmitted last time for reporting collected data. That is, the second message is a message transmitted last time for reporting collected data, and the reference data in the first message is determined based on the first-type information in the second message.

In some embodiments, the M types of information include at least one piece of fourth-type information and at least one piece of first-type information associated with reference data indicated by each piece of fourth-type information.

For example, assuming that the first message is used for reporting five pieces of first collected data, and the first message includes reference data 1, incremental data 1, incremental data 2, incremental data 2, reference data 2, and incremental data 3, wherein reference data 1 is associated with incremental data 1 and incremental data 2, and reference data 2 is associated with incremental data 3, then the first collected data corresponding to incremental data 1 is acquired based on incremental data 1 and reference data 1, the first collected data corresponding to incremental data 2 is acquired based on incremental data 2 and reference data 1, and the first collected data corresponding to incremental data 3 is acquired based on incremental data 3 and reference data 2.

It should be noted that the M types of information including at least one piece of fourth-type information and at least one piece of first-type information associated with reference data indicated by each piece of fourth-type information may refer to that the M types of information include one or more pieces of fourth-type information and one or more pieces of first-type information, and each piece of first-type information needs to be associated with one piece of fourth-type information.

Alternatively, the M types of information including at least one piece of fourth-type information and at least one piece of first-type information associated with reference data indicated by each piece of fourth-type information may refer to that the M types of information include fifth-type information, wherein the fifth-type information is acquired by processing at least one piece of first collected data in the form of list parameters. That is, the fifth-type information includes list parameters acquired based on one or more pieces of fourth-type information and one or more pieces of first-type information. In some embodiments, the fourth-type information in the fifth-type information is also taken as a reporting instance of the first collected data. That is, the fourth-type information is taken as reference data for first-type information associated therewith while being used for reporting the first collected data directly. In some embodiments, each piece of data in the list parameters is selected by a choice function as reference data or incremental data.

### Second-type information:

In the embodiments of the present disclosure, the second-type information includes compressed data of second collected data. In some embodiments, the compressed data of the second collected data includes compressed data acquired by compressing at least one of related data of the second collected data or the second collected data. That is, the compressed data of the second data may include compressed data acquired by compressing the second collected data itself or includes compressed data acquired by compressing other data related to the second collected data.

In some embodiments, at least one of the related data of the second collected data or the second collected data is compressed based on a data compression algorithm. The data compression algorithm is predefined (a default algorithm), configured by the second device, or configured by a network device.

In some embodiments, the related data of the second collected data includes:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

That is, the related data of the second collected data includes at least one piece of incremental data and at least one piece of reference data. Each piece of incremental data represents one piece of second collected data and is associated with one piece of reference data, and the incremental data is acquired based on the represented second collected data and the associated reference data. It is understandable that the reference data associated with each piece of incremental data is equivalent to the reference data associated with the corresponding second collected data. On this basis, the second-type information includes compressed data corresponding to one or more pieces of second collected data, and the compressed data is acquired by compressing incremental data corresponding to each piece of second collected data and reference data associated with each piece of second collected data.

Specifically, the processing of the second-type information includes any one of the following cases.

In case 1, data prior to compression is the second collected data itself, and compressed data is acquired by compressing the second collected data.

In case 2, data prior to compression includes first-type information and fourth-type information that correspond to the second collected data, wherein the first-type information includes incremental data of the second collected data relative to reference data, and the fourth-type information includes the reference data, wherein the number of the first-type information and the number of the fourth-type information are both one or multiple, and each piece of first-type information is associated with one piece of fourth-type information. Compressed data is acquired by compressing the first-type information and the associated fourth-type information.

In case 3, data prior to compression includes fifth-type information, for example, a plurality of pieces of data provided in the form of list parameters, which include at least one piece of reference data and at least one of incremental data, each piece of incremental data is associated with one piece of reference data, and the combination of each piece of incremental data and the associated piece of reference data corresponds to one piece of second collected data. Compressed data is acquired by compressing the fifth-type information.

In some embodiments, the first message includes data type identification information to distinguish among data at different positions of the first message or distinguish among different types of data carried in first messages transmitted multiple times. In some embodiments, the data type identification information is compressed together with at least one of the related data of the second collected data or the second collected data to achieve better data compression efficiency. In some other embodiments, the data type identification information does not participate in the data compression process, and the data type identification information is reported together with the compressed data via the first message, which allows the data receiver to adopt different processing strategies for different types of collected data, for example, using different decompression algorithms to restore data for different types of collected data or classifying different types of collected data.

It saves reporting overheads to report the second collected data over the second-type information than directly report the second collected data prior to compression. The specific data compression efficiency depends on the design of the compression algorithm.

### Third-type information:

The third-type information includes a first information container for bearing third collected data, wherein the first information container is used to indicate that the third collected data is to be parsed by a target device.

In some embodiments, the target device is a terminal node on the transmission link of the first message. In the embodiments of the present disclosure, information placed in the first information container is not expected to be parsed by an intermediate node of data transmission. That is, if it is expected that data is only to be parsed by a terminal node of data transmission, the information to be transmitted may be placed in the information container to prevent an intermediate node of data transmission from parsing the transmitted data. Alternatively, non-standard format data is collected in the third-type information, and the non-standard format data can only be encapsulated in an information container for transmission but cannot be reported via standard-defined parameters.

In some embodiments, the first information container includes at least one of the following:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

In some embodiments, the first information container includes the third collected data itself. That is, the third collected data is directly placed in the information container.

In some embodiments, the first information container includes at least one piece of reference data and incremental data of each piece of third collected data in the at least one piece of third collected data relative to reference data associated with the each piece of third collected data. That is, the first information container includes at least one piece of incremental data and at least one piece of reference data, wherein each piece of incremental data represents one piece of third collected data and is associated with one piece of reference data, and the incremental data is acquired based on the represented third collected data and the associated reference data. It is understandable that the reference data associated with each piece of incremental data is equivalent to the reference data associated with the corresponding third collected data.

For example, the first-type information and the fourth-type information that correspond to one or more pieces of third collected data are placed in the first information container, wherein the first-type information includes incremental data of the third collected data relative to reference data and the fourth-type information includes the reference data, wherein the number of the first-type information and the number of the fourth-type information are both one or multiple, and each piece of first-type information is associated with one piece of fourth-type information. For the implementations of the first-type information and the fourth-type information, reference may be made to the related descriptions in the above embodiments, which are not elaborated herein any further.

For another example, fifth-type information corresponding to one or more pieces of third collected data is placed in the first information container, that is, a plurality of pieces of data provided in the form of list parameters are placed in the first information container. The plurality of pieces of data includes at least one piece of reference data and at least one piece of incremental data, the combination of each piece of reference data and the associated piece of incremental data corresponds to one piece of third collected data, and each piece of incremental data is associated with one piece of reference data. For the implementation of the fifth-type information, reference may be made to the related descriptions in the foregoing embodiments, which is not elaborated herein any further.

In some embodiments, the first information container includes compressed data acquired by compressing at least one of related data of the third collected data or the third collected data, wherein the related data of the third collected data includes: at least one piece of reference data, wherein each piece of reference data in the at least one piece of reference data is associated with the incremental data corresponding to at least one piece of third collected data; and incremental data of each piece of third collected data in the at least one piece of third collected data relative to reference data associated with the each piece of third collected data. That is, the second-type information corresponding to the third collected data is placed in the first information container. Here, for the second-type information corresponding to the third collected data, reference may be made to the related descriptions of the second-type information in the above embodiments, which is not elaborated herein any further.

In some embodiments, the first information container includes non-standard format data corresponding to the third collected data. The non-standard format data refers to data in formats that are not specifically defined in related standard protocols but are specified based on implementations of vendors (a non-standard negotiation process).

As described above, the first message includes data type identification information to distinguish among data at various positions of the first message. In some embodiments, the data type identification information is also placed in the first information container, achieving privacy protection of data transmission. In some other embodiments, the data type identification information is not placed in the first information container, and the data type identification information and the first information container are reported as two information fields. In one aspect, an intermediate node of data transmission can adopt different processing strategies for different types of data, for example, performing different data routing for different types of data. In another aspect, a terminal node of data collection can adopt different processing strategies for different types of data, for example, classifying different types of collected data.

The third collected data is reported over the third-type information. In one aspect, by means of the first information container, an unrelated intermediate node of data transmission can be avoided from parsing the contents in the information container, which is beneficial to privacy protection and minimized disclosure of information. In another aspect, collection of non-standard format data can be achieved by means of the information container, which achieves more flexibility in data collection, i.e., not only standard format data but also non-standard format data can be collected.

In some embodiments, the first message further includes at least one of:
data type identification information, wherein the data type identification information is used to indicate a data type of each piece of data in the first message;
serial number information, wherein the serial number information is used to indicate a serial number of the first message in a plurality of messages transmitted by the first device for reporting collected data; or
first indication information, wherein the first indication information is used to indicate whether unreported collected data is present in the first device.

In some embodiments, the first message includes data type identification information. The data type identification information may be information implicitly carried in positions of various parameters or data in the first message or may be explicit identifiers. Specifically, in some embodiments, the data type is determined based on a predefined parameter position. For example, the first message includes three independent parameters, each of which has a fixed position as predefined in a protocol. The data type can be uniquely determined based on the parameter positions. In some other embodiments, the data type identification information is an explicit identifier, and different types of data correspond to different data type identification information values. For example, a data type identification value "001" represents a measurement result of a data type of channel state information (CSI), and a data type identification value "010" represents a measurement result of a data type of positioning reference signal (PRS).

In some embodiments, the first message includes serial number information. Due to limited transmission resources each time, not all of the collected data can always be reported via a single transmission (or round) of the first message. In a case where the collected data needs to be transmitted multiple times, in order to distinguish among the transmission sequences of a plurality of messages used for reporting the collected data, the serial number information may be used to indicate which reporting message the first message is, which facilitates a data receiver in reconstructing data in the plurality of received messages.

In some embodiments, the first message includes first indication information. The first indication information is configured to assist the receiver in determining whether it is necessary to request the first device to report data again. For example, the first indication information indicates whether the first message is a last round of reporting. For another example, the first indication information is used to indicate whether any remaining data to be reported is present after the first message is reported.

It should be noted that the first message may include any type of information or a combination of a plurality of types of information. In actual practice, information may be combined based on different scenarios or requirements, and the possible combinations are not elaborated herein.

In some embodiments, prior to transmitting the first message by the first device, the method for transmitting information further includes: receiving first configuration information by the first device, wherein the first configuration information is used to instruct the first device to process collected data.

In some embodiments, the first configuration information is transmitted by a second device. That is, the method for transmitting information further includes: transmitting the first configuration information by the second device.

In some embodiments, the first configuration information includes at least one of:
information 1: at least one piece of radio bearer (RB) identification information;
information 2: at least one data compression algorithm;
information 3: information indicating whether to process collected data using a data compression algorithm;
information 4: a correspondence between data type identification information and RB identification information;
information 5: at least one reporting format for collected data; or
information 6: information indicating whether to use an information container to bear collected data.

In some embodiments, the first configuration information includes at least one piece of RB identification information and a correspondence between the data type identification information and the RB identification information. Alternatively, the first configuration information includes at least one reporting format for collected data, wherein one reporting format is to compress data, and accordingly, the first configuration information further includes at least one data compression algorithm. Additionally, the first configuration information further includes information indicating whether to process collected data using a data compression algorithm and information indicating whether to use an information container to bear collected data. In actual practice, the first configuration information may be set to include one or a combination of the plurality of pieces of information described above based on actual demands. The way for combining information may be defined in a protocol, predefined, or flexibly set based on different scenarios, which is not elaborated herein.

The applications of various types of information are in some embodiments described hereinafter.

### Information 1:

The RB identification information in information 1 is used to enable the first device to determine an RB resource for transmission of the first information. In some embodiments, the RB resource includes a signaling RB (SRB) or a data RB (DRB).

### Information 2:

Information 2 is at least one data compression algorithm. In some embodiments, in a case where a unique one data compression algorithm is predefined (e.g., specified in a protocol) and all to-be-reported data needs to be compressed, the first configuration information may not include information 2, and all collected data is compressed using a data compression algorithm configured by default. In a case where the first device may adopt a plurality of data compression algorithms or may not adopt a data compression algorithm, the first configuration information includes information 2 to specify at least one data compression algorithm.

In some embodiments, one or more data compression algorithms may be configured. Specifically, the data compression algorithm may be configured based on different granularities, which may be an RB granularity, a data type granularity, or the like.

In some embodiments, the at least one data compression algorithm includes a data compression algorithm configured for the first message. Specifically, all data in the first message is associated with one data compression algorithm. That is, all RBs used for data collection are associated with one data compression algorithm, and information 2 in the first configuration information is used to indicate the data compression algorithm.

In some embodiments, the at least one data compression algorithm includes a data compression algorithm configured for an RB or a set of RBs associated with the first message. Specifically, the first message may be associated with a plurality of RBs or a plurality of sets of RBs, wherein an RB or a set of RBs is associated with one data compression algorithm, and all collected data associated with each RB or each set of RBs is compressed using the data compression algorithm. That is, all collected data associated with the same RB is associated with the same data compression algorithm. Information 2 in the first configuration information is used to indicate the data compression algorithm associated with each RB or each set of RBs, that is, the data compression algorithm is configured based on the RB granularity.

In some embodiments, the at least one data compression algorithm includes a data compression algorithm respectively configured for a data type identifier or a set of data type identifiers associated with each RB. Specifically, one RB may be associated with a plurality of data type identifiers or a plurality of sets of data type identifiers, and each data type identifier or each set of data type identifiers is associated with one data compression algorithm. Specifically, the data type identifiers associated with the same RB are in a one-to-one correspondence or many-to-one correspondence with the data compression algorithms. That is, different data type identifiers or different sets of data type identifiers associated with the same RB are associated with the different data compression algorithms (one-to-one correspondence), or a plurality of data type identifiers or a plurality of sets of data type identifiers or all data type identifiers associated with the same RB are associated with the same data compression algorithm (many-to-one correspondence). Information 2 in the first configuration information is used to indicate the data compression algorithm associated with a data type identifier or a set of data type identifiers associated with the same RB. That is, the data compression algorithm is configured based on the RB granularity and the data type identifier granularity.

### Information 3:

Information 3 is information indicating whether to process collected data using a data compression algorithm. In a case where not all of the data reporting processes involve reporting of compressed data, the first configuration information includes information 3 to dynamically indicate whether it is necessary to compress data. Information 3 and information 2 may be used in combination or separately. In some embodiments, information 3 is included in other information than the first configuration information to dynamically indicate the first device of whether it is necessary to perform data compression in the current reporting process of collected data. In some embodiments, information 3 is indicated respectively for each data compression algorithm or each group of data compression algorithms included in information 2. That is, information 3 is indicated based on the granularity of data compression algorithm.

### Information 4:

Information 4 is a correspondence between data type identification information and RB identification information. In a case where it's predefined (e.g., specified in a protocol) that all collected data needs to be reported over a fixed RB, the first configuration information does not include information 4. In a case where different types of collected data are reported over different RBs, the first configuration information includes information 4 to dynamically configure an association relationship between the RB and the data type identification information. That is, the first configuration information clearly indicates the collected data corresponding to which data type identifier is reported over which RB.

### Information 5:

Information 5 is at least one reporting format for collected data. In some embodiments, in a case where the reporting format for collected data is predefined (e.g., specified in a protocol), i.e., the reporting format for collected data is fixed, the first configuration information does not include information 5, and all collected data is processed based on the reporting format configured by default. In a case where the reporting format for collected data is dynamically configurable, the first configuration information includes information 5 to specify at least one reporting format.

It should be noted that the reporting format refers to a format based on which the collected data is processed into one of the M types of information. For example, in a scenario where original data is a measurement result, the reporting format includes a format requirement based on which the 8-bit binary bit corresponding to the measurement result numerical subinterval is converted into incremental data or compressed data or is placed into an information container, or the like.

In some embodiments, one or more reporting formats are configured. Specifically, the reporting format is configured based on different granularities, which may be an RB granularity, a data type granularity, or the like.

In some embodiments, the at least one reporting format includes a reporting format configured for the first message. Specifically, all data in the first message is associated with one reporting format. That is, the reporting format is the same for all collected data.

In some embodiments, the at least one reporting format includes a reporting format respectively configured for an RB or a set of RBs associated with the first message. Specifically, the first message is associated with a plurality of RBs or a plurality of set of RBs, wherein an RB or a set of RBs is associated with one reporting format, and the reporting format is the same for all collected data associated with each RB or each set of RB.

In some embodiments, the at least one reporting format includes a reporting format respectively configured for a piece of collected data or a set of collected data associated with each RB. Specifically, one RB is associated with a plurality of pieces of data or a plurality of sets of data, different pieces of data or different sets of data are associated with different reporting formats, and the reporting format is the same for one piece of data or one set of data.

### Information 6:

Information is information indicating whether to use an information container to bear collected data. In a case where it's predefined (e.g., specified in a protocol) that data is reported, by default, in a format of an information container or that the first configuration information carries information 5 which indicates to report data in a format of an information container, the first configuration information does not need to additionally include information 6. In other cases, for example, in a case where information 5 in the first configuration information does not indicate to report data in the format of the information container and non-standard data needs to be reported, the first configuration information indicates, by carrying information 6, whether to use an information container to report data.

It can be seen that, in a case where the first configuration information carries any one or more of the above information 1 to information 6, the flexibility of reporting data can be improved.

In some embodiments, the first device includes a first function entity, wherein the first function entity is configured to implement at least one of the following functions.

Function 1: processing data acquired by the first device based on a data reporting format requirement and generating to-be-report data.

In some embodiments, the format requirement on data reporting may be predefined or preconfigured (default configuration) or may be dynamically configured over the first configuration information (reference may be made to the descriptions of information 5 above).

Function 2: compressing collected data using a configured data compression algorithm.

In some embodiments, the data compression algorithm is predefined or dynamically configured over the first configuration information (reference may be made to the descriptions of information 2 above).

Function 3: processing collected data and generating a data reporting information container.

Function 4: segmenting collected data ready to be reported (e.g., collected data is transmitted over a plurality of first messages).

In some embodiments, function 3 is a default function specified in a protocol or dynamically configured over the first configuration information (reference may be made to the descriptions of information 6 above).

It should be noted that the execution sequence of different functions in the first device is not limited in the present disclosure and different functions may be associated with the same function entity or different function entities.

In some embodiments, the second device includes a second function entity, wherein the second function entity is configured to implement at least one of the following functions.

Function 5: processing different formats of data as received in corresponding processing ways, for example, restoring incremental data to direct data, restoring compressed data to non-compressed data, and parsing data in an information container in a corresponding way.

Function 6: combining data collected in segments.

Function 7: deleting redundant data.

Function 8: storing collected data that has been processed.

In order to clearly illustrate the above embodiments of the present disclosure, specific application examples are provided hereinafter. FIG. 4 illustrate a flowchart of an application example of the embodiments of the present disclosure. As illustrated in FIG. 4, in this application example, the information transmission method includes the following processes.

In process 1, in some embodiments, a first device receives first configuration information; and in some embodiments, a second device transmits the first configuration information.

The first configuration information may be set with reference to the above embodiments, and the first configuration information is used to indicate configuration for reporting collected data by the first device, such that the first device reports collected data based on the configuration.

In process 2, in some embodiments, the first device transmits a third message; and in some embodiments, the second device receives the third message.

The third message is used to indicate that the first device is in a state of waiting for transmission.

In process 3, in some embodiments, the first device receives a fourth message; and in some embodiments, the second device transmits the fourth message.

The fourth message is used to instruct the first device to report a first message. In some embodiments, the fourth message is further used to indicate which types of data (for example, indicating at least one data type identifier and/or one type or more types of the M types of information) are to be reported.

In process 4, in some embodiments, the first device transmits the first message; and in some embodiments, the second device receives the first message.

The first message may be set with reference to the above embodiments, and the first message is used for reporting collected data.

In process 5, in some embodiments, the first device receives a fourth message; and in some embodiments, the second device transmits the fourth message.

The fourth message is similar to the fourth message in process 3. In a case where first indication information in the first message in process 4 indicates that data waiting to be transmitted is still present, the second device transmits the fourth message, instructing or requesting the first device to report remaining collected data. Understandably, in some embodiments, even though the first indication information indicates that collected data waiting to be reported is still present, the second device may not execute process 5. For example, the second device directly transmits a next message for reporting collected data or the second device determines, based on actual demands, that it's unnecessary to report the remaining collected data.

It should be noted that the above application examples are merely illustrative, and do not limit the implementing process of the embodiments of the present disclosure. For example, in some embodiments, the method for transmitting information may not include any one of processes 1 to 3 and 5, which may be set based on actual application scenarios.

In some embodiments, the method for transmitting information further includes: transmitting first capability information by the first device, wherein the first capability information includes at least one of:
a capability of whether the first device supports data compression;
a data compression algorithm supported by the first device;
a data compression algorithm not supported by the first device;
a capability of whether the first device supports collection of non-standardized data or not
a data type of non-standardized data of which collection is supported by the first device;
a data type of non-standardized data of which collection is not supported by the first device;
a reporting format supported by the first device; or
a reporting format not supported by the first device.

In some embodiments, the first capability information is transmitted to a data receiver, e.g., to the second device, and the method for transmitting information further includes receiving the first capability information by the second device, which may be implemented with reference to the above embodiments.

The first device reports the first capability information, such that the second device can reasonably configure the data reporting process, thereby optimizing the data collection process.

In some embodiments, the method for transmitting information further includes: transmitting second capability information by the second device, wherein the second capability information includes at least one of:
a capability of whether the second device supports data compression;
a data compression algorithm supported by the second device;
a data compression algorithm not supported by the second device;
a capability of whether the second device supports collection of non-standardized data;
a data type of non-standardized data of which collection is supported by the second device;
a data type of non-standardized data of which collection is not supported by the second device;
a reporting format supported by the second device; or
a reporting format not supported by the second device.

Accordingly, the first device receives the second capability information.

The second device transmits the second capability information to the first device, such that the first device can report collected data based on the capability of the second device, thereby optimizing the data collection process.

FIG. 5 illustrates a schematic block diagram of a first device 500 according to some embodiments of the present disclosure. The first device 500 includes a first communication module 510.

The first communication module 510 is configured to transmit a first message, wherein the first message includes M types of information, and each type of information in the M types of information is acquired by processing collected data in a processing way corresponding to the each type of information, M being an integer greater than or equal to 1.

In some embodiments, the M types of information include at least one of:
first-type information, including incremental data of first collected data relative to reference data;
second-type information, including compressed data of second collected data; or
third-type information, including a first information container for bearing third collected data, wherein the first information container is used to indicate that the third collected data is to be parsed by a target device.

In some embodiments, the M types of information further include fourth-type information, wherein the fourth-type information includes the reference data.

In some embodiments, in a case where the first message does not include fourth-type information carrying reference data or in a case where fourth-type information carrying reference data in the first message is unavailable, the reference data is determined based on a second message, wherein the second message is transmitted prior to the first message.

In some embodiments, the reference data is determined based on at least one of fourth-type information or first-type information in the second message.

In some embodiments, the M types of information include at least one piece of fourth-type information and at least one piece of first-type information associated with reference data indicated by each piece of fourth-type information.

In some embodiments, the compressed data of the second collected data includes compressed data acquired by compressing at least one of related data of the second collected data or the second collected data;
wherein the related data of the second collected data includes:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

In some embodiments, the first information container includes at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

In some embodiments, the first message further includes at least one of:
data type identification information, wherein the data type identification information is used to indicate a data type of each type of data in the M types of information;
serial number information, wherein the serial number information is used to indicate a serial number of the first message in a plurality of messages transmitted by the first device 500 for reporting collected data; or
first indication information, wherein the first indication information is used to indicate whether unreported collected data is present in the first device 500.

In some embodiments, the first communication module 510 is further configured to receive first configuration information, wherein the first configuration information includes at least one of:
at least one piece of RB identification information;
at least one data compression algorithm;
information indicating whether to process collected data using a data compression algorithm;
a correspondence between data type identification information and RB identification information;
at least one reporting format for collected data; or
information indicating whether to use an information container to bear collected data.

In some embodiments, the at least one data compression algorithm includes:
a data compression algorithm configured for the first message; or
a data compression algorithm respectively configured for an RB or a set of RBs associated with the first message; or
a data compression algorithm respectively configured for a data type identifier or a set of data type identifiers associated with each RB.

In some embodiments, the at least one reporting format includes:
a reporting format configured for the first message; or
a reporting format respectively configured for an RB or a set of RBs associated with the first message; or
a reporting format respectively configured for a piece of collected data or a set of collected data associated with each RB.

In some embodiments, the first communication module 510 is further configured to transmit first capability information, wherein the first capability information includes at least one of:
a capability of whether to support data compression;
a supported data compression algorithm;
an unsupported data compression algorithm;
a capability of whether to support collection of non-standardized data;
a data type of non-standardized data of which collection is supported;
a data type of non-standardized data of which collection is not supported;
a supported reporting format; or
an unsupported reporting format.

In some embodiments, the first communication module 510 is further configured to receive second capability information, wherein the second capability information includes at least one of:
a capability of whether a second device receiving the first message supports data compression;
a data compression algorithm supported by the second device;
a data compression algorithm not supported by the second device;
a capability of whether the second device supports collection of non-standardized data;
a data type of non-standardized data of which collection is supported by the second device;
a data type of non-standardized data of which collection is not supported by the second device;
a reporting format supported by the second device; or
a reporting format not supported by the second device.

The first device 500 in the embodiments of the present disclosure is capable of implementing the corresponding functions of the first device in the above method embodiments. For corresponding processes, functions, implementations, and beneficial effects of various modules (submodules, units, components, or the like) in the first device 500, reference may be made to the corresponding descriptions in the above method embodiments, which are not elaborated herein any further. It should be noted that the described functions of various modules (submodules, units, components, or the like) of the first device 500 in the embodiments of the present disclosure may be implemented by different modules (submodules, units, components, etc.) or implemented by the same module (submodule, unit, component, or the like).

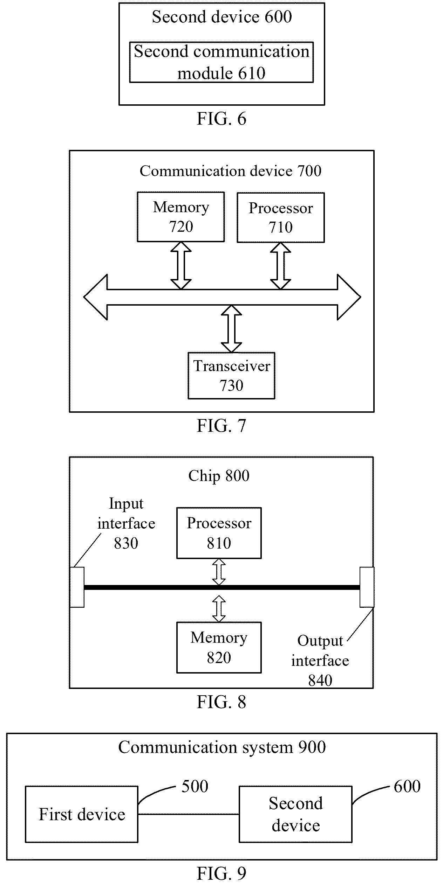

FIG. 6 illustrates a schematic block diagram of a second device 600 according to some embodiments of the present disclosure. The second device 600 includes a second communication module 610.

The second communication module 610 is configured to receive a first message, wherein the first message includes M types of information, and each type of information in the M types of information is acquired by processing collected data in a processing way corresponding to the each type of information, M being an integer greater than or equal to 1.

In some embodiments, the M types of information include at least one of:
first-type information, including incremental data of first collected data relative to reference data;
second-type information, including compressed data of second collected data; or
third-type information, including a first information container for bearing third collected data, wherein the first information container is used to indicate that the third collected data is to be parsed by a target device.

In some embodiments, the M types of information further include fourth-type information, wherein the fourth-type information includes the reference data.

In some embodiments, in a case where the first message does not include fourth-type information carrying reference data or in a case where fourth-type information carrying reference data in the first message is unavailable, the reference data is determined based on a second message, wherein the second message is transmitted prior to the first message.

In some embodiments, the reference data is determined based on at least one of fourth-type information or first-type information in the second message.

In some embodiments, the M types of information include at least one piece of fourth-type information and at least one piece of first-type information associated with reference data indicated by each piece of fourth-type information.

In some embodiments, the compressed data of the second collected data includes compressed data acquired by compressing at least one of related data of the second collected data or the second collected data;
wherein the related data of the second collected data includes:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

In some embodiments, the first information container includes at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

In some embodiments, the related data of the third collected data includes:
at least one piece of reference data, wherein each piece of reference data in the at least one piece of reference data is associated with the incremental data corresponding to at least one piece of third collected data; and
incremental data of each piece of third collected data in the at least one piece of third collected data relative to reference data associated with the each piece of third collected data.

In some embodiments, the first message further includes at least one of:
data type identification information, wherein the data type identification information is used to indicate a data type of each piece of data in the first message;
serial number information, wherein the data type identification information is used to indicate a serial number of the first message in a plurality of messages transmitted by the first device for reporting collected data; or
first indication information, wherein the first indication information is used to indicate whether unreported collected data is present in the first device.

In some embodiments, the second communication module 610 is further configured to transmit first configuration information, wherein the first configuration information includes at least one of:
at least one piece of RB identification information;
at least one data compression algorithm;
information indicating whether to process collected data using a data compression algorithm;
a correspondence between data type identification information and RB identification information;
at least one reporting format for collected data; or
information indicating whether to use an information container to bear collected data.

In some embodiments, the at least one data compression algorithm includes:
a data compression algorithm configured for the first message; or
a data compression algorithm respectively configured for an RB or a set of RBs associated with the first message; or
a data compression algorithm respectively configured for a data type identifier or a set of data type identifiers associated with each RB.

In some embodiments, the at least one reporting format includes:
a reporting format configured for the first message; or
a reporting format respectively configured for an RB or a set of RBs associated with the first message; or
a reporting format respectively configured for a piece of collected data or a set of collected data associated with each RB.

In some embodiments, the second communication module 610 is further configured to receive first capability information, wherein the first capability information includes at least one of:
a capability of whether a first device transmitting the first message supports data compression;
a data compression algorithm supported by the first device;
a data compression algorithm not supported by the first device;
a capability of whether the first device supports collection of non-standardized data;
a data type of non-standardized data of which collection is supported by the first device;
a data type of non-standardized data of which collection is not supported by the first device;
a reporting format supported by the first device; or
a reporting format not supported by the first device.

In some embodiments, the second communication module 10 is further configured to transmit second capability information, wherein the second capability information includes at least one of:
a capability of whether to support data compression;
a supported data compression algorithm;
an unsupported data compression algorithm;
a capability of whether to support collection of non-standardized data or not;
a data type of non-standardized data of which collection is supported;
a data type of non-standardized data of which collection is not supported;
a supported reporting format; or
an unsupported reporting format.

The second device 600 in the embodiments of the present disclosure is capable of implementing the corresponding functions of the second device in the above method embodiments. For corresponding processes, functions, implementations, and beneficial effects of various modules (submodules, units, components, or the like) in the second device 600, reference may be made to the corresponding descriptions in the above method embodiments, which are not elaborated herein any further. It should be noted that the described functions of various modules (submodules, units, components, or the like) of the second device 600 in the embodiments of the present disclosure may be implemented by different modules (submodules, units, components, or the like) or implemented by the same module (submodule, unit, component, or the like).

FIG. 7 illustrates a schematic structural diagram of a communication device 700 according to some embodiments of the present disclosure. The communication device 700 includes a processor 710, and the processor 710 is configured to load and run one or more computer programs from a memory to cause the communication device 700 to implement the methods in the embodiments of the present disclosure.

In some embodiments, the communication device 700 further includes a memory 720. The processor 710 is configured to load and run one or more computer programs from the memory 720 to cause the communication device 700 to implement the methods in the embodiments of the present disclosure.

The memory 720 may be a device independent of the processor 710 or integrated in the processor 710.

In some embodiments, the communication device 700 further includes a transceiver 730. The processor 710 controls the transceiver 730 to communicate with other devices, for example, transmitting information or data to other devices or receiving information or data from other devices.

The transceiver 730 may include a transmitter and a receiver. The transceiver 730 further includes one or more antennas.

In some embodiments, the communication device 700 is the first device in the embodiments of the present disclosure, and the communication device 700 can implement the corresponding processes, implemented by the first device, in various methods of the embodiments of the present disclosure, which is not elaborated herein for the purpose of brevity.

In some embodiments, the communication device 700 is the second device in the embodiments of the present disclosure, and the communication device 700 can implement the corresponding processes, implemented by the second device, in various methods of the embodiments of the present disclosure, which is not elaborated herein for the purpose of brevity.

FIG. 8 illustrates a schematic block diagram of a chip 800 according to some embodiments of the present disclosure. The chip 800 includes a processor 810, and the processor 810 is configured to load and run one or more computer programs from a memory to implement the methods in the embodiments of the present disclosure.

In some embodiments, the chip 800 further includes a memory 820. The processor 810 is configured to load and run one or more computer programs from the memory 820 to implement the methods performed by the first device in the embodiments of the present disclosure.

The memory 820 may be a device independent of the processor 810 or integrated in the processor 810.

In some embodiments, the chip 800 further includes an input interface 830. The processor 810 controls the input interface 830 to communicate with other devices or chips, for example, acquiring information or data from other devices or chips.

In some embodiments, the chip 800 further includes an output interface 840. The processor 810 controls the output interface 840 to communicate with other devices or chips, for example, outputting information or data to other devices or chips.

In some embodiments, the chip is applied in the first device in the embodiments of the present disclosure, and the chip can implement the corresponding processes, implemented by the first device, in various methods of the embodiments of the present disclosure, which is not elaborated herein for the purpose of brevity.

In some embodiments, the chip is applied in the second device in the embodiments of the present disclosure, and chip can implement the corresponding processes, implemented by the second device, in various methods of the embodiments of the present disclosure, which is not elaborated herein for the purpose of brevity.

It is understandable that the chip mentioned in the embodiments of the present disclosure is also referred to as a system-level chip, a system chip, a chip system, a system-on-chip, or the like.

The processor mentioned above is a general processor, a digital signal processor (DSP), a field-programmable gate array (FPGA), an application-specific integrated circuit (ASIC), other programmable logic devices, transistor logic devices, or discrete hardware assemblies, or the like. The general processor mentioned above is a microprocessor, any conventional processor, or the like.

The memory mentioned above is a volatile memory or a non-volatile memory, or includes both the volatile memory and the non-volatile memory. The non-volatile memory is a read-only memory (ROM), a programmable ROM (PROM), an erasable PROM (EPROM), an electrically EPROM (EEPROM), or a flash memory. The volatile memory is a random access memory (RAM).

It is understandable that the above memory is exemplary but not for limitation. For example, the memory in the embodiments of the present disclosure may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), a direct rambus RAM (DR RAM), or the like. That is, the memory in the embodiments of the present disclosure is intend to include, but not limit to these and any other suitable type of memory.

FIG. 9 illustrates a schematic block diagram of a communication system 900 according to some embodiments of the present disclosure. The communication system 900 includes a first device 500 and a second device 600.

The first device 500 is configured to transmit a first message, wherein the first message includes M types of information, and each type of information in the M types of information is acquired by processing collected data in a processing way corresponding to the each type of information, M being an integer greater than or equal to 1.

The second device 600 is configured to receive a first message, wherein the first message includes M types of information, and each type of information in the M types of information is acquired by processing collected data in a processing way corresponding to the each type of information, M being an integer greater than or equal to 1.

All or part of the above embodiments may be implemented by software, hardware, firmware, or any combination thereof. All or part of the above embodiments, when implemented by software, may be implemented in the form of a computer program product. The computer program product includes one or more computer instructions. The one or more instructions, when loaded and run on a computer, all or part of the processes or functions in the embodiments of the present disclosure are generated. The computer is a general computer, a special-purpose computer, a computer network, or other programmable devices. The one or more computer instructions are stored in a computer-readable medium or transmitted from one computer-readable medium to another computer-readable medium. For example, the one or more computer instructions are transmitted from one network station, computer, server or data center in a wired manner (such as via a coaxial-cable, an optical fiber, or a digital subscriber line (DSL)) or in wireless manner (such as via infrared, radio, or microwaves) to another network station, computer, server or data center. The computer-readable medium may be any available medium accessible by a computer or may be a data storage device including one or more servers, data centers or the like that are integrated with an available medium. The available medium may be a magnetic medium (e.g., a floppy disk, a hard disk, or a magnetic tape), an optical medium (e.g., a DVD), a semiconductor medium (e.g., a solid state disk (SSD)), or the like.

It is understandable that the serial numbers of the processes in various embodiments of the present disclosure do not represent the execution sequence among the processes. The execution sequence among the processes is determined based on the functions and internal logic thereof, and the implementation process of the embodiments of the present disclosure are not limited thereto.

A person skilled in the art may clearly understand that, for the specific working processes of the above-described system, device and unit, reference may be made to the corresponding processed in the above method embodiments, which are not repeated any further for the convenience and brevity of description.

Described above are specific embodiments of the present disclosure, and are not intended to limit the present disclosure. Within the technical scope disclosed in the present disclosure, any variations or replacements readily available to those skilled in the art should be encompassed within the scope of protection of the present disclosure. Accordingly, the scope of protection of the present disclosure should be subject to the scope of protection of the claims.

## Claims

1. A method for transmitting information, performed by a first device, the method comprising:
transmitting a first message, wherein the first message comprises M types of information, and each type of information in the M types of information is acquired by processing collected data in a processing manner corresponding to the each type of information, M being an integer greater than or equal to 1.

2. The method according to claim 1, wherein the M types of information comprise at least one of:
first-type information, comprising incremental data of first collected data relative to reference data;
second-type information, comprising compressed data of second collected data; or
third-type information, comprising a first information container for carrying third collected data, wherein the first information container is used to indicate that the third collected data is to be parsed by a target device.

3. The method according to claim 2, wherein the M types of information further comprise fourth-type information, wherein the fourth-type information comprises the reference data.

4. The method according to claim 2 or 3, wherein in a case where the first message does not comprise fourth-type information carrying reference data or in a case where fourth-type information carrying reference data in the first message is unavailable, the reference data is determined based on a second message, wherein the second message is transmitted prior to the first message.

5. The method according to claim 4, wherein the reference data is determined based on at least one of fourth-type information or first-type information in the second message.

6. The method according to any one of claims 2 to 5, wherein the M types of information comprise at least one piece of fourth-type information and at least one piece of first-type information associated with reference data indicated by each piece of fourth-type information in the at least one piece of fourth-type information.

7. The method according to any one of claims 2 to 6, wherein the compressed data of the second collected data comprises compressed data acquired by compressing at least one of related data of the second collected data or the second collected data;
wherein the related data of the second collected data comprises:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

8. The method according to any one of claims 2 to 7, wherein the first information container comprises at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

9. The method according to any one of claims 1 to 8, wherein the first message further comprises at least one of:
data type identification information, wherein the data type identification information is used to indicate a data type of each piece of data in the first message;
serial number information, wherein the serial number information is used to indicate a serial number of the first message in a plurality of messages transmitted by the first device for reporting collected data; or
first indication information, wherein the first indication information is used to indicate whether unreported collected data is present in the first device.

10. The method according to any one of claims 1 to 9, wherein prior to transmitting the first message, the method further comprises:
receiving first configuration information, wherein the first configuration information comprises at least one of:
at least one piece of radio bearer (RB) identification information;
at least one data compression algorithm;
information indicating whether to process collected data using a data compression algorithm;
a correspondence between data type identification information and RB identification information;
at least one reporting format for collected data; or
information indicating whether to use an information container to carry collected data.

11. The method according to claim 10, wherein the at least one data compression algorithm comprises:
a data compression algorithm configured for the first message; or
a data compression algorithm configured for an RB or a set of RBs associated with the first message; or
a data compression algorithm configured for a data type identifier or a set of data type identifiers associated with each RB.

12. The method according to claim 10 or 11, wherein the at least one reporting format comprises:
a reporting format configured for the first message; or
a reporting format configured for an RB or a set of RBs associated with the first message; or
a reporting format configured for a piece of collected data or a set of collected data associated with each RB.

13. The method according to any one of claims 1 to 12, further comprising:
transmitting first capability information, wherein the first capability information comprises at least one of:
a capability of whether the first device supports data compression;
a data compression algorithm supported by the first device;
a data compression algorithm not supported by the first device;
a capability of whether the first device supports collection of non-standardized data;
a data type of non-standardized data of which collection is supported by the first device;
a data type of non-standardized data of which collection is not supported by the first device;
a reporting format supported by the first device; or
a reporting format not supported by the first device.

14. The method according to any one of claims 1 to 13, further comprising:
receiving second capability information, wherein the second capability information comprises at least one of:
a capability of whether a second device receiving the first message supports data compression;
a data compression algorithm supported by the second device;
a data compression algorithm not supported by the second device;
a capability of whether the second device supports collection of non-standardized data;
a data type of non-standardized data of which collection is supported by the second device;
a data type of non-standardized data of which collection is not supported by the second device;
a reporting format supported by the second device; or
a reporting format not supported by the second device.

15. A method for transmitting information, performed by a second device, the method comprising:
receiving a first message, wherein the first message comprises M types of information, and each type of information in the M types of information is acquired by processing collected data in a processing manner corresponding to the each type of information, M being an integer greater than or equal to 1.

16. The method according to claim 15, wherein the M types of information comprise at least one of:
first-type information, comprising incremental data of first collected data relative to reference data;
second-type information, comprising compressed data of second collected data; or
third-type information, comprising a first information container for carrying third collected data, wherein the first information container is used to indicate that the third collected data is to be parsed by a target device.

17. The method according to claim 16, wherein the M types of information further comprise fourth-type information, wherein the fourth-type information comprises the reference data.

18. The method according to claim 16 or 17, wherein in a case where the first message does not comprise fourth-type information carrying reference data or in a case where fourth-type information carrying reference data comprised in the first message is unavailable, the reference data is determined based on a second message, wherein the second message is transmitted prior to the first message.

19. The method according to claim 18, wherein the reference data is determined based on at least one of fourth-type information or first-type information in the second message.

20. The method according to any one of claims 16 to 19, wherein the M types of information comprise at least one piece of fourth-type information and at least one piece of first-type information associated with reference data indicated by each piece of fourth-type information in the at least one piece of fourth-type information.

21. The method according to any one of claims 16 to 20, wherein the compressed data of the second collected data comprises compressed data acquired by compressing at least one of related data of the second collected data or the second collected data;
wherein the related data of the second collected data comprises:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

22. The method according to any one of claims 16 to 21, wherein the first information container comprises at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

23. The method according to any one of claims 15 to 22, wherein the first message further comprises at least one of:
data type identification information, wherein the data type identification information is used to indicate a data type of each piece of data in the first message;
serial number information, wherein the serial number information is used to indicate a serial number of the first message in a plurality of messages transmitted by the first device for reporting collected data; or
first indication information, wherein the first indication information is used to indicate whether unreported collected data is present in the first device.

24. The method according to any one of claims 15 to 23, wherein prior to receiving the first message, the method further comprises:
transmitting first configuration information, wherein the first configuration information comprises at least one of:
at least one piece of radio bearer (RB) identification information;
at least one data compression algorithm;
information indicating whether to process collected data using a data compression algorithm;
a correspondence between data type identification information and RB identification information;
at least one reporting format for collected data; or
information indicating whether to use an information container to carry collected data.

25. The method according to claim 24, wherein the at least one data compression algorithm comprises:
a data compression algorithm configured for the first message; or
a data compression algorithm configured for an RB or a set of RBs associated with the first message; or
a data compression algorithm configured for a data type identifier or a set of data type identifiers associated with each RB.

26. The method according to claim 24 or 25, wherein the at least one reporting format comprises:
a reporting format configured for the first message; or
a reporting format configured for an RB or a set of RBs associated with the first message; or
a reporting format configured for a piece of collected data or a set of collected data associated with each RB.

27. The method according to any one of claims 15 to 26, further comprising:
receiving first capability information, wherein the first capability information comprises at least one of:
a capability of whether a first device transmitting the first message supports data compression;
a data compression algorithm supported by the first device;
a data compression algorithm not supported by the first device;
a capability of whether the first device supports collection of non-standardized data;
a data type of non-standardized data of which collection is supported by the first device;
a data type of non-standardized data of which collection is not supported by the first device;
a reporting format supported by the first device; or
a reporting format not supported by the first device.

28. The method according to any one of claims 15 to 27, further comprising:
transmitting second capability information, wherein the second capability information comprises at least one of:
a capability of whether the second device supports data compression;
a data compression algorithm supported by the second device;
a data compression algorithm not supported by the second device;
a capability of whether the second device supports collection of non-standardized data;
a data type of non-standardized data of which collection is supported by the second device;
a data type of non-standardized data of which collection is not supported by the second device;
a reporting format supported by the second device; or
a reporting format not supported by the second device.

29. A first device, comprising:
a first communication module, configured to transmit a first message, wherein the first message comprises M types of information, and each type of information in the M types of information is acquired by processing collected data in a processing way corresponding to the each type of information, M being an integer greater than or equal to 1.

30. The first device according to claim 29, wherein the M types of information comprise at least one of:
first-type information, comprising incremental data of first collected data relative to reference data;
second-type information, comprising compressed data of second collected data; or
third-type information, comprising a first information container for bearing third collected data, wherein the first information container is used to indicate that the third collected data is to be parsed by a target device.

31. The first device according to claim 30, wherein the M types of information further comprise fourth-type information, wherein the fourth-type information comprises the reference data.

32. The first device according to claim 30 or 31, wherein in a case where the first message does not comprise fourth-type information carrying reference data or in a case where fourth-type information carrying reference data comprised in the first message is unavailable, the reference data is determined based on a second message, wherein the second message is transmitted prior to the first message.

33. The first device according to claim 32, wherein the reference data is determined based on at least one of fourth-type information or first-type information in the second message.

34. The first device according to any one of claims 30 to 33, wherein the M types of information comprise at least one piece of fourth-type information and at least one piece of first-type information associated with reference data indicated by each piece of fourth-type information.

35. The first device according to any one of claims 30 to 34, wherein the compressed data of the second collected data comprises compressed data acquired by compressing at least one of related data of the second collected data or the second collected data;
wherein the related data of the second collected data comprises:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

36. The first device according to any one of claims 30 to 35, wherein the first information container comprises at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

37. The first device according to any one of claims 29 to 36, wherein the first message further comprises at least one of:
data type identification information, wherein the data type identification information is used to indicate a data type of each piece of data in the first message;
serial number information, wherein the serial number information is used to indicate a serial number of the first message in a plurality of messages transmitted by the first device for reporting collected data; or
first indication information, wherein the first indication information is used to indicate whether unreported collected data is present in the first device.

38. The first device according to any one of claims 29 to 37, wherein the first communication module is further configured to:
receive first configuration information, wherein the first configuration information comprises at least one of:
at least one piece of radio bearer (RB) identification information;
at least one data compression algorithm;
information indicating whether to process collected data using a data compression algorithm;
a correspondence between data type identification information and RB identification information;
at least one reporting format for collected data; or
information indicating whether to use an information container to bear collected data.

39. The first device according to claim 38, wherein the at least one data compression algorithm comprises:
a data compression algorithm configured for the first message; or
a data compression algorithm respectively configured for an RB or a set of RBs associated with the first message; or
a data compression algorithm respectively configured for a data type identifier or a set of data type identifiers associated with each RB.

40. The first device according to claim 38 or 39, wherein the at least one reporting format comprises:
a reporting format configured for the first message; or
a reporting format respectively configured for an RB or a set of RBs associated with the first message; or
a reporting format respectively configured for a piece of collected data or a set of collected data associated with each RB.

41. The first device according to any one of claims 29 to 40, wherein the first communication module is further configured to:
transmit first capability information, wherein the first capability information comprises at least one of:
a capability of whether to support data compression;
a supported data compression algorithm;
an unsupported data compression algorithm;
a capability of whether to support collection of non-standardized data;
a data type of non-standardized data of which collection is supported;
a data type of non-standardized data of which collection is not supported;
a supported reporting format; or
an unsupported reporting format.

42. The first device according to any one of claims 29 to 41, wherein the first communication module is further configured to:
receive second capability information, wherein the second capability information comprises at least one of:
a capability of whether a second device receiving the first message supports data compression;
a data compression algorithm supported by the second device;
a data compression algorithm not supported by the second device;
a capability of whether the second device supports collection of non-standardized data;
a data type of non-standardized data of which collection is supported by the second device;
a data type of non-standardized data of which collection is not supported by the second device;
a reporting format supported by the second device; or
a reporting format not supported by the second device.

43. A second device, comprising:
a second communication module, configured to receive a first message, wherein the first message comprises M types of information, and each type of information in the M types of information is acquired by processing collected data in a processing way corresponding to the each type of information, M being an integer greater than or equal to 1.

44. The second device according to claim 43, wherein the M types of information comprise at least one of:
first-type information, comprising incremental data of first collected data relative to reference data;
second-type information, comprising compressed data of second collected data; or
third-type information, comprising a first information container for bearing third collected data, wherein the first information container is used to indicate that the third collected data is to be parsed by a target device.

45. The second device according to claim 44, wherein the M types of information further comprise fourth-type information, wherein the fourth-type information comprises the reference data.

46. The second device according to claim 44 or 45, wherein in a case where the first message does not comprise fourth-type information carrying reference data or in a case where fourth-type information carrying reference data comprised in the first message is unavailable, the reference data is determined based on a second message, wherein the second message is transmitted prior to the first message.

47. The second device according to claim 46, wherein the reference data is determined based on at least one of fourth-type information or first-type information in the second message.

48. The second device according to any one of claims 44 to 47, wherein the M types of information comprise at least one piece of fourth-type information and at least one piece of first-type information associated with reference data indicated by each piece of fourth-type information.

49. The second device according to any one of claims 44 to 48, wherein the compressed data of the second collected data comprises compressed data acquired by compressing at least one of related data of the second collected data or the second collected data;
wherein the related data of the second collected data comprises:
at least one piece of reference data, wherein each piece of reference data in the at least one piece of reference data is associated with incremental data corresponding to at least one piece of second collected data; and
incremental data of each piece of second collected data in the at least one piece of second collected data relative to reference data associated with the each piece of second collected data.

50. The second device according to any one of claims 44 to 49, wherein the first information container comprises at least one of:
the third collected data;
at least one piece of reference data, wherein each piece of reference data in the at least one piece of reference data is associated with incremental data corresponding to at least one piece of third collected data;
incremental data of each piece of third collected data in the at least one piece of third collected data relative to reference data associated with the each piece of third collected data;
compressed data acquired by compressing at least one of related data of the third collected data or the third collected data; or
non-standard format data corresponding to the third collected data.

51. The second device according to any one of claims 43 to 50, wherein the first message further comprises at least one of:
data type identification information, wherein the data type identification information is used to indicate a data type of each piece of data in the first message;
serial number information, wherein the serial number information is used to indicate a serial number of the first message in a plurality of messages transmitted by the first device for reporting collected data; or
first indication information, wherein the first indication information is used to indicate whether unreported collected data is present in the first device.

52. The second device according to any one of claims 43 to 51, wherein the second communication module is further configured to:
transmit first configuration information, wherein the first configuration information comprises at least one of:
at least one piece of radio bearer (RB) identification information;
at least one data compression algorithm;
information indicating whether to process collected data using a data compression algorithm;
a correspondence between data type identification information and RB identification information;
at least one reporting format for collected data; or
information indicating whether to use an information container to bear collected data.

53. The second device according to claim 52, wherein the at least one data compression algorithm comprises:
a data compression algorithm configured for the first message; or
a data compression algorithm respectively configured for an RB or a set of RBs associated with the first message; or
a data compression algorithm respectively configured for a data type identifier or a set of data type identifiers associated with each RB.

54. The second device according to claim 52 or 53, wherein the at least one reporting format comprises:
a reporting format configured for the first message; or
a reporting format respectively configured for an RB or a set of RBs associated with the first message; or
a reporting format respectively configured for a piece of collected data or a set of collected data associated with each RB.

55. The second device according to any one of claims 43 to 54, wherein the second communication module is further configured to:
receive first capability information, wherein the first capability information comprises at least one of:
a capability of whether a first device transmitting the first message supports data compression;
a data compression algorithm supported by the first device;
a data compression algorithm not supported by the first device;
a capability of whether the first device supports collection of non-standardized data;
a data type of non-standardized data of which collection is supported by the first device;
a data type of non-standardized data of which collection is not supported by the first device;
a reporting format supported by the first device; or
a reporting format not supported by the first device.

56. The second device according to any one of claims 43 to 55, the second communication module is further configured to:
transmit second capability information, wherein the second capability information comprises at least one of:
a capability of whether to support data compression;
a supported data compression algorithm;
an unsupported data compression algorithm;
a capability of whether to support collection of non-standardized data;
a data type of non-standardized data of which collection is supported;
a data type of non-standardized data of which collection is not supported;
a supported reporting format; or
an unsupported reporting format.

57. A first device, comprising: a processor and a memory; wherein
the memory is configured to store one or more computer programs; and
the processor is configured to load and run the one or more computer programs stored in the memory to cause the first device to perform the method as defined in any one of claims 1 to 14.

58. A second device, comprising: a processor and a memory; wherein
the memory is configured to store one or more computer programs; and
the processor is configured to load and run the one or more computer programs stored in the memory to cause the second device to perform the method as defined in any one of claims 15 to 28.

59. A chip, comprising: a processor, wherein the processor is configured to load and run one or more computer programs to cause a device installed with the chip to perform the method as defined in any one of claims 1 to 28.

60. A computer-readable storage medium, storing one or more computer programs, wherein the one or more computer programs, when run by a device, cause the device to perform the method as defined in any one of claims 1 to 28.

61. A computer program product, comprising: one or more computer instructions, wherein the one or more computer instructions cause a computer to perform the method as defined in any one of claims 1 to 28.

62. A computer program, wherein the computer program causes a computer to perform the method as defined in any one of claims 1 to 28.

63. A communication system, comprising:
a first device, configured to perform the method as defined in any one of claims 1 to 14; and
a second device, configured to perform the method as defined in any one of claims 15 to 28.
